(19) Europäisches Patentamt

European Patent Office

Office européen des brevets

(11) **EP 4 280 101 B1**

(12) **EUROPEAN PATENT SPECIFICATION**

(45) Date of publication and mention
of the grant of the patent:
**20.11.2024 Bulletin 2024/47**

(21) Application number: **22174715.7**

(22) Date of filing: **20.05.2022**

(51) International Patent Classification (IPC):
**G06F 18/00** (2023.01)

(52) Cooperative Patent Classification (CPC):
**G06F 18/24143; G06F 18/2178**

(54) **PSEUDO-GROUND-TRUTH GENERATION FROM TIMESTAMP SUPERVISION**

PSEUDO-GRUN-TRUTH-ERZEUGUNG AUS ZEITSTEMPELÜBERWACHUNG

GÉNÉRATION DE VÉRITÉ DE RÉALITÉ DE TERRAIN À PARTIR DE LA SUPERVISION D'HORODATAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.11.2023 Bulletin 2023/47**

(73) Proprietors:
• **TOYOTA JIDOSHA KABUSHIKI KAISHA**
**Toyota-shi, Aichi-ken, 471-8571 (JP)**
• **Rheinische Friedrich-Wilhelms-Universität Bonn**
**53113 Bonn (DE)**

(72) Inventors:
• **FRANCESCA, Gianpiero**
**1140 BRUSSELS (BE)**
• **SOURI, Yaser**
**53115 BONN (DE)**
• **ABU FARHA, Yazan**
**53115 BONN (DE)**
• **GALL, Juergen**
**53115 BONN (DE)**

(74) Representative: **Cabinet Beau de Loménie**
**158, rue de l'Université**
**75340 Paris Cedex 07 (FR)**

(56) References cited:
• **ZIXUN WANG ET AL: "Less is More: Surgical Phase Recognition from Timestamp Supervision", ARXIV.ORG, CORNELL UNIVERSITY LIBRARY, 201 OLIN LIBRARY CORNELL UNIVERSITY ITHACA, NY 14853, 16 February 2022 (2022-02-16), XP091161399**
• **"Pattern Recognition : 5th Asian Conference, ACPR 2019, Auckland, New Zealand, November 26-29, 2019, Revised Selected Papers, Part II", vol. 13024, 1 January 2021, SPRINGER INTERNATIONAL PUBLISHING, Cham, ISBN: 978-3-030-41298-2, ISSN: 0302-9743, article SOURI YASER ET AL: "FIFA: Fast Inference Approximation for Action Segmentation : 43rd DAGM German Conference, DAGM GCPR 2021, Bonn, Germany, September 28 - October 1, 2021, Proceedings", pages: 282 - 296, XP055971358, DOI: 10.1007/978-3-030-92659-5_18**
• **KUEHNE HILDE ET AL: "A Hybrid RNN-HMM Approach for Weakly Supervised Temporal Action Segmentation", IEEE TRANSACTIONS ON PATTERN ANALYSIS AND MACHINE INTELLIGENCE, vol. 42, no. 4, 1 April 2020 (2020-04-01), USA, pages 765 - 779, XP055970851, ISSN: 0162-8828, Retrieved from the Internet <URL:https://ieeexplore.ieee.org/ielx7/34/9025082/08585084.pdf?tp=&arnumber=8585084&isnumber=9025082&ref=aHR0cHM6Ly93d3cuZ29vZ2xlLmNvbS8=> DOI: 10.1109/TPAMI.2018.2884469**

**Description**

TECHNICAL FIELD

The present disclosure relates to the field of automatic recognition, and more particularly to a computer-implemented method for generating pseudo-ground-truth data for training a machine learning model, such as a neural network, to segment or localize patterns in a sequence of frames, such as a sequence of images. The method may find applications in all kinds of industries, including the automotive industry. For instance, the method may be used with the aim of training a machine learning model to understand a vehicle's environment in order to adequately control it, or to monitor and support human activities in places such as a factory.

TECHNOLOGICAL BACKGROUND

Machine learning models, among other systems, may be trained to segment or localize patterns in a sequence of frames, i.e. to analyze the sequence of frames in order to detect which sub-ranges of the sequence include some learnt patterns. Generally, the machine learning model is designed to output pattern estimations for each frame, i.e. the probabilities that every one of the frames includes this or that pattern.

Recently, fully supervised approaches for action segmentation in untrimmed videos have achieved encouraging results. However, full supervision is a labor-intensive endeavor as it consists in annotating every instance of the actions of interest with their exact temporal boundaries. Furthermore, in many cases, the exact temporal boundary of actions is subjective and can lead to annotation inconsistencies.

To address the issues of full supervision, a lot of effort has been allocated to weakly supervised approaches. In this perspective, Li et al. (Zhe Li, Yazan Abu Farha, and Juergen Gall. Temporal action segmentation from timestamp supervision. In IEEE Conference on Computer Vision and Pattern Recognition (CVPR), pages 8365-8374, 2021, hereinafter "Li") introduced timestamp supervision for action segmentation. Timestamp supervision is a form of weak supervision where the annotator is required to annotate a single frame and its class for each action in the video. This provides a form of temporal information that is crucial for action segmentation and missing from other weak supervision approaches such as transcript supervision, in which transcripts are the ordered set of actions that occur in a video without any temporal information about the start and end of each action instance. While the cost of obtaining timestamp supervision is only marginally higher than transcript supervision, Li showed that timestamp supervision results in action segmentation performance close to the fully supervised setting.

Despite promising results, timestamp supervision as proposed by Li assumes that every action (or more generally every pattern) instance in the sequence is annotated. Nonetheless, an annotator could miss some patterns and as a result, not all pattern segments are necessarily annotated. Generating dense labels in this setting would produce incorrect pseudo-ground-truth, which has a severe negative impact on the performance.

Zixun Wang et al.: "Less is More: Surgical Phase Recognition from Timestamp Supervision", arxiv.org, Cornell University Library, arXiv:2202.08199, 16 February 2022, XP091161399, discloses timestamp supervision for surgical phase recognition. Specifically, the annotated frames are treated as anchors and pseudo labels are diffused to both sides, starting from anchors and stopping at the high-uncertainty frames.

SUMMARY

In order to at least substantially remedy the above-mentioned drawbacks, the present disclosure relates to a computer-implemented method for generating pseudo-ground-truth data for training a machine learning model to segment or localize patterns in a sequence of frames over a succession dimension, the method comprising:

- providing a sequence of frames and a plurality of timestamps, each timestamp including identification of a respective one of the frames and a pattern annotation of said frame;
- defining at least one subset comprising the frames located between a first timestamp and a consecutive second timestamp of the plurality of timestamps, in the succession dimension;
- initially assigning the frames of the at least one subset to one of three non-empty regions, the three regions comprising a first region, a second region and a neutral region joining the first region to the second region, wherein the first region starts from the first timestamp and extends towards the second timestamp, and comprises the frames to be associated with the pattern of the first timestamp, the second region starts from the second timestamp and extends towards the first timestamp, and comprises the frames to be associated with the pattern of the second timestamp;
- obtaining pattern estimations for each frame of the at least one subset;
- optimizing respective boundaries between the first region, the second region and the neutral region based on a compromise between the size of the neutral region and a match between the pattern estimations of the frames and the regions to which the frames are assigned;

- outputting pseudo-ground-truth data comprising, for each frame of the first region and/or the second region after the optimizing, identification of said frame and, as a corresponding pattern annotation, the pattern annotation of the first timestamp and/or the second timestamp, respectively.

For the sake of conciseness, this method is referred to hereinafter as the generating method.

A sequence of frames is an ordered series of frames along one dimension, known as the succession dimension, which can be e.g. time or space.

The contents of the frames are such that a plurality of frames forms a pattern. The segmentation aims to determine which pattern is included in which (desirably continuous) series of the frames. Thus, in the present disclosure, unless otherwise mentioned, the segmentation includes the task sometimes referred to as alignment and corresponding to aligning, in the succession dimension, a known output pattern with an input sequence of frames. Localization aims to associate a given pattern to each of the frames which belong to that pattern. Therefore, as opposed to segmentation, localization may result in some overlapping patterns, and/or in frames associated to no pattern at all (e.g. background).

A machine learning model may comprise one or more mathematical expressions configured to process the frames in order to output information representative of the patterns. Weights of the machine learning model may be iteratively updated by the training method. The machine learning model may comprise one or more artificial neural network. Each artificial neural network (ANN) is a computational model with one or more neurons, each neuron having a transfer function. The ANN therefore has a global transfer function that allows the calculation of at least one output as a function of at least one input. The neurons may be structured in one or more layers. The transfer functions of each neuron or the relative weights of the neurons in the network can be weighted by coefficients called synaptic weights (or simply weights) and bias. The weights can be modulated according to the training of the ANN. In principle, training comprises providing the ANN with a set of situations in which inputs and outputs are known. During the training process, the ANN adapts its synaptic weights and biases to conform to the learned situations, possibly with some tolerance.

The machine learning model is assumed to be able to learn from the pseudo-ground-truth data.

As mentioned above, a timestamp includes identification of a respective one of the frames and a pattern annotation of said frame. The timestamp may be defined as in Li. Basically, the timestamp provides punctual information about what the pattern of a frame is. Annotation may be performed manually or otherwise. Identification of a frame may be any information enabling to identify a frame among the other frames of the sequence, including a position of the frame or the frame itself. Therefore, for conciseness, a timestamp may be used to identify a position on the succession dimension, by referring to the position of the frame identified by that timestamp.

The defining at least one subset may be carried out explicitly, e.g. with a subset having an identified name and content, or implicitly, e.g. when the method works in a certain sub-range of the sequence even without giving it proper identification.

Hereinafter, unless otherwise stated, "the subset" refers to the at least one subset. In an embodiment, "the at least one subset" comprises all the subsets of the sequence, respectively defined between all pairs of consecutive timestamps of the plurality. More generally, herein, the article "the" may refer to "the at least one".

The subset comprises all the frames located between two consecutive timestamps, namely the first timestamp and the second timestamp. That is, the plurality does not comprise any other timestamp between the first timestamp and the second timestamp. Thus, the subset is a continuous portion of the sequence in the succession dimension. The respective frames of the first timestamp and the second timestamp, i.e. the boundaries of the subset, may be included or not in the subset. For conciseness, it will be assumed hereinafter that the first timestamp precedes the second timestamp, i.e. the frame of the first timestamp comes before the frame of the second timestamp in the succession dimension, but the opposite situation is also contemplated.

The subset is divided into three regions. The first region is on the side of the first timestamp, the second region is on the side of the second timestamp, and the neutral region joins the first region to the second region. The regions are adjoining or contiguous, i.e. no frame of the subset is left out of the regions and the regions do not overlap one another. In addition, each region comprises a set of frames which is continuous over the succession dimension.

As with the subset, the three regions may be defined explicitly or implicitly. For instance, instead of focusing on a subset bounded by two consecutive timestamps as detailed before, one may focus on a sub-range of the sequence comprising one timestamp and frames on either side(s) thereof, the sub-range being possibly centered on that timestamp. A first portion of the sub-range, corresponding to the first region, would start from that timestamp and extend towards an end of the sub-range. As applicable, a second portion of the sub-range would start from that timestamp and extend towards the other end of the sub-range. The second portion would correspond to the previously-defined second region of a neighboring subset. End portions, corresponding to parts of the previously-defined neutral region, would extend between the first and second portions and respective ends of the sub-range. Although the portions defined in this way may look formally different from the above-defined regions, they amount to implicitly defining the above-mentioned three regions, as long as the initial assigning provides a neutral region or portion to account for possibly missing timestamps, as will be detailed below.

After initializing, the division in three regions is then optimized based on pattern estimations for the frames of the subset. Pattern estimations for each frame, also known as frame-wise pattern probability estimates, are predicted probabilities that a given frame corresponds to a given pattern. For instance, the frame-wise pattern probability estimates may comprise a N-component vector for each frame, with each i-th component, i from 1 to N, being the probability that the given frame corresponds to the i-th pattern learnt by the machine learning model. As mentioned above, the frame-wise pattern probability estimate may be obtained by methods known *per se,* e.g. machine learning models.

The compromise used to optimize the boundaries between the first region, the second region and the neutral region, balances the size of the neutral region, which is desirably as low as possible because it is not known to which pattern the frames assigned thereto correspond, and a match between the pattern estimations of the frames and the regions to which the frames are assigned, i.e. the confidence with which frames are assigned to the first region and the second region. In other words, this compromise leverages the information included in the first timestamp and the second timestamp, by assuming that the neighboring frames will belong to the same pattern, while leaving an uncertainty area in-between, namely the neutral region, if pattern estimates show that it is not quantitatively reasonable to assign some frames either to the pattern of the first timestamp or to the pattern or the second timestamp. Yet in other words, the compromise corresponds to a trade-off between the confidence in the frames with assigned labels, namely the frames of the first and second region, and the size of the neutral region.

The optimizing may be carried out for each subset separately, or jointly for all the subsets.

Finally, the method outputs the regions after optimization, namely pattern annotation of the first timestamp for the frames assigned to the first region, and pattern annotation of the second timestamp for the frames assigned to the second region. This output may be presented in a variety of more or less explicit formats, which enable to derive this information. For instance, the output may merely comprise a list of frames identifications which correspond to the successive boundaries between the different regions; then, considering the timestamps, it is possible to derive the patterns associated to the frames which were not left in one of the neutral regions after optimization.

Thanks to these provisions, the present generating method relax the assumption that all pattern should be annotated (i.e. that a corresponding timestamp should be provided) and proposes an approach that is designed to deal with potential missing segments in the timestamp supervision framework. In contrast to Li, this approach can skip frames belonging to a missing segment during training while trying to generate labels for all frames belonging to annotated segments. As explained before, the neutral region provides room for possibly unannotated patterns, and may be ignored for subsequent training.

This approach is therefore more robust to missing segments in the timestamps and thus provides improved pseudo-ground-truth data which enhance training.

Optionally, the pattern estimations are obtained by the machine learning model. In particular, the machine learning model may be configured to make probabilistic predictions, e.g. at test time: for instance, a neural network is able to make probabilistic predictions, whereas a support vector machine only makes binary predictions and is not regarded as configured to make probabilistic predictions. In these embodiments, the machine learning model may be the same as the machine learning model which is intended to be trained with the pseudo-ground-truth data. In order for the machine learning model to provide reasonable pattern estimations, the machine learning model may be pre-trained with the sequence of frames and the plurality of timestamps.

Optionally, the neutral region comprises the frames to be associated with an unknown pattern, and optionally wherein the pseudo-ground-truth data comprise, for each frame of the neutral region after the optimizing, identification of said frame and, as a corresponding pattern annotation, the unknown pattern. The frames annotated with the unknown pattern may be ignored during subsequent training. Alternatively, the pseudo-ground-truth data may omit the frames of the neutral region.

Optionally, the sequence of frames is selected from a group comprising a plurality of images, a video, an audio track, an electrical input. More specifically, a few non-limiting examples are set out below:

- the sequence of frames may be an audio track, i.e. a succession of sounds over time, and the pattern to be segmented may be an instrument and/or a speaker;
- the sequence of frames may be a video, i.e. a succession of images over time, or a plurality of images, and the pattern to be segmented may be an action shown by the video or the plurality of images;
- the sequence of frames may be a three-dimensional (3D) image, seen as a succession of two-dimensional images over a succession dimension which is a third spatial dimension, and the pattern to be segmented may be an object shown in the 3D image.
- the sequence of frames may be a strip of images (e.g. satellite images), i.e. a succession of images over a spatial dimension, and the pattern to be segmented may be a given region (e.g. a region of land);
- the sequence of frames may be an electrical signal (e.g. an electrocardiogram input), i.e. a succession of electrical values over time, and the pattern to be segmented may be a given motion of the signal.

The sequence of frames may be obtained from a sensor, e.g. a microphone, an imaging device such as a camera, electrodes, etc., or from a database, e.g. a local or distant server or the like.

Optionally, the pattern is an action. The action may be carried out by a human being, an animal or a machine.

Optionally, the generating method further comprises:

- defining at least one end subset comprising the frames located between an end of the sequence and a third timestamp consecutive to said end, in the succession dimension;
- initially assigning the frames of the at least one end subset to one of two non-empty regions, the two regions comprising a third region and an end region, wherein the third region starts from the third timestamp and extends towards the end of the sequence, and comprises the frames to be associated with the pattern of the third timestamp, and the end regions joins the third region to the end of the sequence;
- obtaining pattern estimations for each frame of the at least one end subset;
- optimizing a boundary between the third region and the end region based on a compromise between the size of the end region and a match between the pattern estimations of the frames and the regions to which the frames are assigned;
- wherein the pseudo-ground-truth data comprises, for each frame of the third region after the optimizing, identification of said frame and, as a corresponding pattern annotation, the pattern annotation of the third timestamp.

These steps aim to replicate the principles of the previously-described generating method at the beginning and the end of the sequence of frames. The third region has the same function as the first region or the second region, and the end region has the same function as the neutral region. The explanations given before thus apply mutatis mutandis to these optional features.

Optionally, a match between the pattern estimations of the frames and the regions to which the frames are assigned is quantified using a sum of log probabilities of pattern estimations of the frames assigned to the respective regions. Thus, the match is simple to compute and may be used for real-time applications such as autonomous or assisted driving, or manufacturing monitoring.

The optimizing comprises solving the constrained minimization problem

$$\{r_i^*, g_i^*, l_i^*\} = \underset{r_i, g_i, l_i}{\operatorname{argmin}} \quad \sum_{i=1}^{N} \left( \sum_{t=p_i-l_i}^{p_i+r_i} -log\tilde{y}_t[y_{p_i}]\right) + \beta \sum_{i=0}^{N} g_i$$

$$\text{s.t.} \quad p_{i+1} - p_i = r_i + g_i + l_{i+1}$$

$$r_i \geq 0$$

$$g_i \geq 0$$

$$l_i \geq 0.$$

where $r_i$ is the number of frames of the first region, $g_i$ is the number of frames of the neutral region, $l_{i+1}$ is the number of frames of the second region, N is the number of timestamps, $p_i$ is the position of the i-th timestamp in the sequence, $y_{p_i}$ is the pattern annotation of the i-th timestamp, $\tilde{y}_t$ is the pattern estimation for frame $t$, and $\beta$ is a hyperparameter.

Optionally, the compromise is represented by a non-differentiable model and the optimizing comprises solving a differentiable approximation of the non-differentiable model. By replacing the non-differentiable model by a differentiable approximation thereof, it is possible to use a broader range of iterative optimizations and to make the optimizing step yield faster results for a comparable, if not better performance. As a consequence, the generating method can be used in real-time applications such as autonomous or assisted driving, or manufacturing monitoring.

The present disclosure is further directed to a training method for a machine learning model configured to segment or localize patterns in a sequence of frames over a succession dimension, the training method comprising:

- generating pseudo-ground-truth data by the previously described generating method;
- training the machine learning model based on the pseudo-ground-truth data.

As mentioned above, the frames assigned to the respective neutral regions may be ignored or otherwise specially handled in order to improve the training. The machine learning model may comprise models of any type, e.g. a neural network such as a convolutional neural network (CNN).

The present disclosure is further directed to a system configured to generate pseudo-ground-truth data for training a machine learning model to segment or localize patterns in a sequence of frames over a succession dimension, the system being configured to:

- provide a sequence of frames and a plurality of timestamps, each timestamp including identification of a respective one of the frames and a pattern annotation of said frame;
- define at least one subset comprising the frames located between a first timestamp and a consecutive second timestamp of the plurality of timestamps, in the succession dimension;
- initially assign the frames of the at least one subset to one of three non-empty regions, the three regions comprising a first region, a second region and a neutral region joining the first region to the second region, wherein the first region starts from the first timestamp and extends towards the second timestamp, and comprises the frames to be associated with the pattern of the first timestamp, the second region starts from the second timestamp and extends towards the first timestamp, and comprises the frames to be associated with the pattern of the second timestamp;
- obtain pattern estimations for each frame of the at least one subset;
- optimize respective boundaries between the first region, the second region and the neutral region based on a compromise between the size of the neutral region and a match between the pattern estimations of the frames and the regions to which the frames are assigned;
- output pseudo-ground-truth data comprising, for each frame of the first region and/or the second region after the optimizing, identification of said frame and, as a corresponding pattern annotation, the pattern annotation of the first timestamp and/or the second timestamp, respectively.

The system may be configured to carry out the above-mentioned generating method, and may have part or all of the above-described features. The system may have the hardware structure of a computer.

The present disclosure is further related to a computer program including instructions for executing the steps of the above described method for generating pseudo-ground-truth data when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method for generating pseudo-ground-truth data. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

The invention and advantages thereof will be better understood upon reading the detailed description which follows, of embodiments given as non-limiting examples. This description refers to the appended drawings, wherein:

- Fig. 1 is a block diagram illustrating a generating method according to an embodiment;
- Fig. 2 is a diagram illustrating a generating system according to an embodiment;
- Fig. 3 is a diagram illustrating an operation principle of an embodiment;
- Fig. 4 is a diagram illustrating the definition of the regions according to an embodiment.

DETAILED DESCRIPTION OF EMBODIMENTS

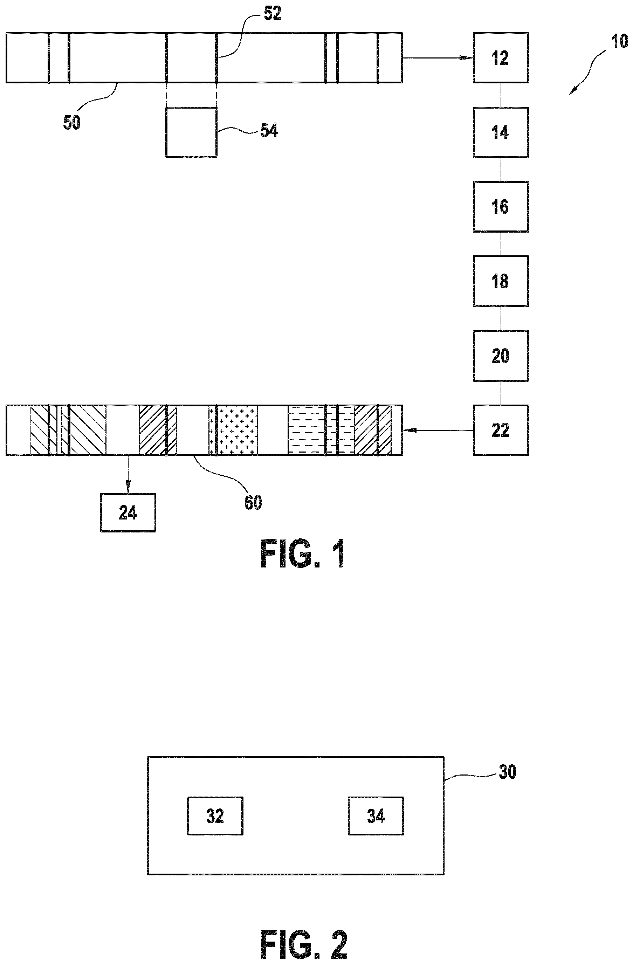

Figure 1 shows a diagram of a computer-implemented method for generating pseudo-ground-truth data (hereinafter the "generating method 10") for training a machine learning model to segment or localize patterns in a sequence of frames over a succession dimension, according to embodiments of the present disclosure. The generating method 10 comprises a providing step 12 of providing a sequence of frames 50 and a plurality of timestamps 52, a defining step 14 of defining at least one subset 54 comprising the frames located between a first timestamp and a consecutive second timestamp, an assigning step 16 of initially assigning the frames of the at least one subset to one of three non-empty regions, and obtaining step 18 of obtaining pattern estimations for each frame of the at least one subset 54, an optimizing step 20 of optimizing respective boundaries between the regions and an outputting step 22 of outputting pseudo-ground-truth data 60 comprising pattern annotations of the frames based on the regions to which they are assigned after the optimizing step 20.

The generating method 10 may be used in the context of training a machine learning model using the generated pseudo-ground-truth data. In this respect, a training method for a machine learning model configured to segment or localize patterns in a sequence of frames may comprise generating pseudo-ground-truth data 60 by the generating method 10, and a training step 24 of training the machine learning model based on the pseudo-ground-truth data 60. The training step 24 is known per se in the art.

Figure 2 illustrates a system configured to generate pseudo-ground-truth data (hereinafter the "generating system 30") for training a machine learning model to segment or localize patterns in a sequence of frames over a succession dimension.

The generating system 30 may comprise an electronic circuit, a processor 32 (shared, dedicated, or group), a combinational logic circuit, a memory 34 that executes one or more software programs, and/or other suitable components that provide the described functionality. In other words, the generating system 30 may be a computer device. The memory 34, or an external memory to which the generating system 30 may be connected, may store data, e.g. a computer program which when executed, carries out the generating method 10 or the training method according to the present disclosure; thus, the memory 34 or the external memory may form a recording medium readable by a computer and having recorded thereon a computer program including instructions for executing the steps of the method. In particular, the generating system 30 or the external memory may store software which comprises a computer program including instructions for executing the steps of the generating method 10 or the training method. More generally, the generating system 30 may be configured to implement the generating method 10 or the training method.

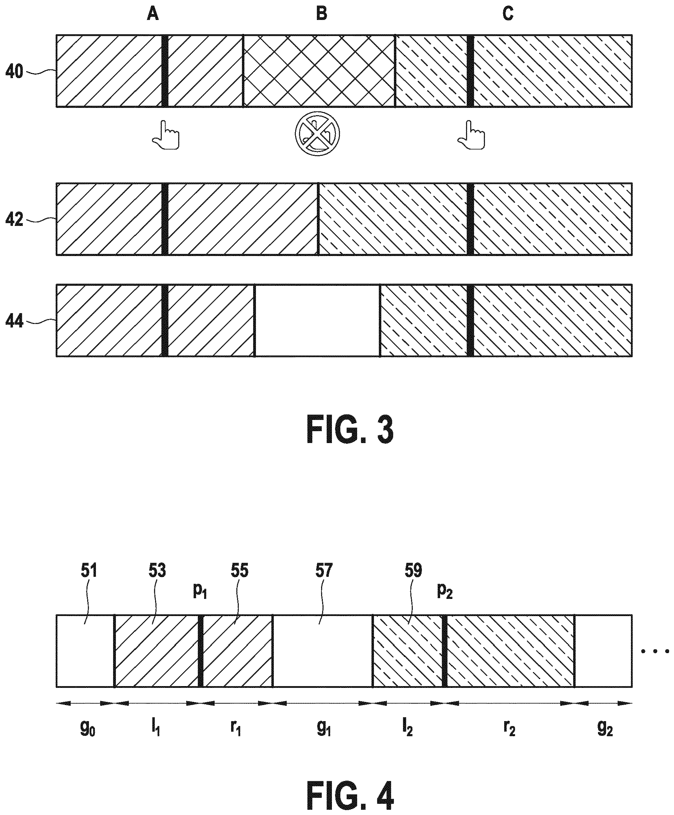

In the following, an embodiment of the generating method 10 is detailed with reference to Figs. 3 and 4, focusing on an application to segmenting actions in a video, i.e. segmenting patterns in a sequence of frames over a succession dimension, wherein each pattern correspond to an action performed in the video, each frame comprises an image and the succession dimension is time. However, the principles explained hereinafter can be generalized by the skilled person to any pattern other than actions, any succession dimension other than time, and/or any frame other than images. For instance, the sequence may be, as detailed above, a plurality of images, a video, an audio track, an electrical input, etc. In addition, in the following embodiment, the machine learning model is a neural network model (shortened as "network"), but as detailed above, other models can be envisaged.

Given an untrimmed video, action segmentation is the task of predicting the action label for each frame. The video is represented as a set of $D$-dimensional pre-extracted framewise features $X = (x_1, \cdots, x_T)$ with length $T$ (i.e. the video comprises $T$ frames). A fixed set of Q action classes is assumed, and the ground truth label is represented by $Y = (y_1, \cdots, y_T)$. Action segmentation models are required to predict framewise probability estimates $\tilde{Y} = (\tilde{y}_1, \cdots, \tilde{y}_T)$ where $\tilde{y}_t \in [0,1]^Q$ represents the predicted probability for each class. If full supervision is available during training (Y is provided), a per-frame classification loss can be used to train the network.

Timestamps are a set of $N$ positions in time $P = (p_1, \cdots, p_N)$ and their corresponding labels $y_{p_1}, \cdots, y_{p_N}$. It is assumed that the timestamps are ordered,

$$1 \leq p_1 \leq \cdots \leq p_N \leq T$$

That is, each timestamp including identification of a respective one of the frames, e.g. a position thereof, and a pattern annotation of said frame, e.g. a label.

A naive approach for action segmentation using timestamps is to only use the timestamps for training the neural network model. The neural network model estimates the frame-wise probability for the entire video and the classification loss is calculated only using the frames with the timestamps.

Li assumes that every action segment is annotated with one timestamp. Given this assumption, to uniquely produce the ground truth from the timestamps, one needs to only find the time location between consecutive timestamps where the action label changes from the previous timestamp to the next one. Li proposes an approach to find the action boundary between the consecutive timestamps that minimizes the variance of framewise pre-classification features estimated by the action segmentation network. Given the boundary between the timestamps, the pseudo-ground-truth annotation $A = (a_1, \cdots, a_T)$ can be constructed and used for training the network on all temporal positions instead of only on the temporal positions of the timestamps as in the naive approach. Li showed that the proposed approach for the generation of the labels for all frames is crucial to performance in timestamp supervision.

However, if some actions are not annotated by timestamps, the central assumption by Li is not valid. In this setting, where some actions are skipped, for example, due to annotator mistake, the pseudo-ground-truth generated by Li is incorrect for the entire region of the unannotated action, as shown in Fig. 3. Figure 3 shows the ground-truth annotation 40 of a sequence having three patterns A, B and C, only A and C being annotated; the timestamps are represented by a black vertical line, here with a small hand underneath, figuring manual annotation. The pseudo-ground-truth generated by Li, under reference sign 42, misses the unannotated segment B.

This incorrect pseudo-ground-truth generation severely affects the performance of their method. In an "Oracle" experiment where the correct boundary is known for each annotated timestamp, the inventors observed that the accuracy of action segmentation only marginally drops when the number of annotated segments is reduced from 95% to 70%. In comparison, the approach by Li suffers a large drop in accuracy.

The present disclosure proposes an approach for pseudo-ground-truth generation that is robust to unannotated segments. The underlying idea is to only extend the segment boundary from the timestamp position in each direction until a point where the network is still confident in the class of that segment while trying to minimize the size of ignored regions.

As shown in Figure 4 which illustrates the beginning of the video, given two consecutive timestamps $p_i$ and $p_{i+1}$ (i from 1 to $N$ - 1), the subset of the video between the two timestamps is divided into three regions. The first region 55 with size $r_i$ belongs to the first timestamp $p_i$ (i.e. comprises the frames to be associated with the pattern of the first timestamp $p_i$), the middle or neutral region 57 with size $g_i$ is the neutral region (also called ignored region) and the third region 59 with size $l_{i+1}$ belongs to the second timestamp $p_{i+1}$ (i.e. comprises the frames to be associated with the pattern of the second timestamp $p_{i+1}$). As shown in Fig. 4, the first region 55 starts from the first timestamp $p_i$ and extends towards the second timestamp $p_{i+1}$, the second region starts from the second timestamp $p_{i+1}$ and extends towards the first timestamp $p_i$, and the neutral region 57 joins the first region 55 to the second region 59.

In this embodiment, the beginning and ending regions of the video are also ignored segments $g_0$ and $g_N$, respectively: they correspond to the previously-mentioned end regions 51 and the respective neighboring timestamps correspond to the previously-mentioned third timestamps $p_1$, $p_N$. The regions between an end region and a timestamp are the previously-mentioned third regions 53. The third timestamp $p_1$ may coincide with the first timestamp of the first subset; likewise, the third timestamp $p_N$ may coincide with the second timestamp of the last subset.

In the assigning step 16, the size of the regions may be determined randomly or following any desired rule; only, the first region 55, the neutral region 57 and the second region 59 should not be empty. Experiments have shown that the impact of initialization is small. However, uniform initialization scheme (i.e. the first region 55, the neutral region 57 and the second region 59 initially having the same size) performs better.

A requirement of the optimizing step 18 is for the network to be confident about the correct action class of the frames in each timestamp region $[p_i - l_i, p_i + r_i]$ (the hatched regions in Figure 4). Simultaneously the size of the neutral regions $g_i$ (the white regions in the Figure 4) should be as small as possible. In other words, the optimizing is carried out based on a compromise between the size of the neutral region and a match between the pattern estimations of the frames and the regions to which the frames are assigned.

The goal is to first find the appropriate size of the regions of the video $r_i$, $g_i$, $l_i$ and then use them to construct a pseudo-ground-truth for the network training. In order to do so, the framewise probabilities of the video $\tilde{Y}$ are estimated using the network (obtaining step 18), namely the same network as that which is then to be trained using the pseudo-ground-truth data. In order for the network to be confident about the correct class of the region for timestamp $p_i$, the sum of the negative log probabilities of the frames inside that region,

$$\sum_{t=p_i-l_i}^{p_i+r_i} -log\, \tilde{y}_t[y_{p_i}] \qquad (1)$$

should be low. That is, a match between the pattern estimations of the frames and the regions to which the frames are assigned is quantified using a sum of log probabilities of pattern estimations of the frames assigned to the respective regions. Furthermore the sum of the size of the neutral regions,

$$\sum_{i=0}^{N} g_i \qquad (2)$$

should be as small as possible.

This goal can be formulated as the following constrained minimization problem

$$\{r_i^*, g_i^*, l_i^*\} = \underset{r_i, g_i, l_i}{\operatorname{argmin}} \quad \sum_{i=1}^{N} \left( \sum_{t=p_i-l_i}^{p_i+r_i} -\log \tilde{y}_t[y_{p_i}] \right) + \beta \sum_{i=0}^{N} g_i$$

$$\text{s.t.} \qquad p_{i+1} - p_i = r_i + g_i + l_{i+1} \qquad (3)$$

$$r_i \geq 0$$

$$g_i \geq 0$$

$$l_i \geq 0.$$

The hyper-parameter $\beta$ balances the sizes of neutral regions in the result. The first constraint $p_{i+1}$ - $p_i$ = $r_i$ + $g_i$ + $l_{i+1}$ ensures that the regions between two timestamps (i.e. the first region 55, the neutral region 57 and the second region 59) do not overlap and cover the entire subset. The last three constraints ensure the positivity of the size of the regions. Note that the regions might be empty after optimizing, as opposed to the initializing.

The hyper-parameter $\beta$ may be set between 0.1 and 5, preferably between 0.2 and 2, preferably between 0.5 and 1.5. The hyper-parameter $\beta$ may be set to 0.7. A sensitivity study shows that lower values for $\beta$ tend to achieve better results, especially when decreasing the percentage of annotated segments. This is expected since with a lower percentage of annotations more frames should be assigned to the neutral region, which is achieved by lowering the value of $\beta$. When there are no missing segments, no frame should be assigned to the ignore region, and higher values of $\beta$ are better.

This minimization problem (or model which represents the compromise) is not differentiable and may be solved as such by appropriate methods known in the art. In the present embodiment however, following the principles of European patent application EP 21 184 408 (see also Souri, Yaser & Abu Farha, Yazan & Despinoy, Fabien & Francesca, Gianpiero & Gall, Juergen. (2021). FIFA: Fast Inference Approximation for Action Segmentation., DOI 10.48550/ARXIV.2108.03894, hereinafter "FIFA"), the optimizing step 18 comprises solving a differentiable approximation of the non-differentiable model. In other words, this constrained minimization problem is mapped into an approximate unconstrained optimization problem that can be solved using gradient descent.

For instance, the objective function in equation (3) can be re-written as

$$\sum_{i=1}^{N} \left( \sum_{t=p_i-l_i}^{p_i+r_i} -\log \tilde{y}_t[y_{p_i}] \right) + \beta \sum_{i=0}^{N} g_i =$$

$$\sum_{i=1}^{N} \left( \sum_{t=1}^{T} -\log \tilde{y}_t[y_{p_i}] \mathcal{I}(t | p_i - l_i \leq t < p_i + r_i) \right) + \beta \sum_{i=0}^{N} g_i \qquad (4)$$

where $\mathcal{I}(t | p_i - l_i \leq t < p_i + r_i)$ is the indicator function with value 1 if $t$ is within the left and right bounds of the timestamp and 0 otherwise. The $\mathcal{I}$ function, which is a non-differentiable function with value of 0 or 1 depending on its parameters, can be replaced with the plateau function of FIFA: $\mathcal{I}(t | p_i - l_i \leq t < p_i + r_i) \simeq f(t | c_i, w_i, s)$ where $c_i = p_i + \frac{r_i - l_i}{2}$, $w_i = \frac{r_i + l_i}{2}$, and $s$ is the sharpness of the plateau function which is fixed. Besides, the second term, penalizing the ignored regions, can be approximately calculated as the regions not covered by the plateau functions:

$$\sum_{i=0}^{N} g_i \simeq \sum_{t=1}^{T} \left( 1 - \sum_{i=1}^{N} f(t | c_i, w_i, s) \right). \qquad (5)$$

Finally, the differentiable approximation can be rewritten as:

$$E(r_i, g_i, l_i) = \sum_{i=1}^{N} (\sum_{t=1}^{T} -log\tilde{y}_t[y_{p_i}]f(t|c_i, w_i, s)) +$$

$$\beta \sum_{t=1}^{T} (1 - \sum_{i=1}^{N} f(t|c_i, w_i, s)).$$
(6)

and

$$\{r'^*_i, g'^*_i, l'^*_i\} \quad = \underset{r'_i, g'_i, l'_i}{\text{argmin}} \; E(r_i, g_i, l_i)$$

$$r_i, g_i, l_{i+1} \quad = (p_{i+1} - p_i) \cdot \text{softmax}(r'_i, g'_i, l'_{i+1}).$$
(7)

where new parameters $r'_i$, $g'_i$, and $l'_i$, which are the log of the length of the regions relative to each other and can take any real value, may be introduced to make sure that the parameters $r_i$, $g_i$, and $l_i$ satisfy the original constraints.

This optimization is solved for each video in the training batch separately. This optimization problem is only performed during training and to generate the pseudo-ground-truth data. The objective specified in (3) is not used for updating the network weights.

After solving the optimization problem, the pseudo-ground-truth data is generated. The pseudo-ground-truth data comprises, for each frame of the first region and/or the second region after the optimizing, identification of said frame and, as a corresponding pattern annotation, the pattern annotation of the first timestamp and/or the second timestamp, respectively. The pattern annotations are determined based on the optimized regions. The pseudo-ground-truth data may comprise, for each frame of the neutral region after the optimizing, identification of said frame and, as a corresponding pattern annotation, an unknown pattern. Otherwise, the frames of the neutral regions may be ignored or not annotated.

This pseudo-ground-truth data may be used for training the action segmentation network as in Li (training step 24).

As can be seen in Fig. 3, the presence of ignored frames in the resulting pseudo-ground-truth data 44 more accurately captures possibly missing annotations, such as for action B in the initial sequence. Therefore, by explicitly handling missing annotations by ignoring some frames during training, the present approach is robust to missing annotations and experiments have shown that this approach outperforms the approach of Li on various percentages of annotated segments (between 70% and 95%) and on both 50Salads and Breakfast datasets (Sebastian Stein and Stephen J McKenna. Combining embedded accelerometers with computer vision for recognizing food preparation activities. In ACM International Joint Conference on Pervasive and Ubiquitous Computing, pages 729-738, 2013. // Hilde Kuehne, Ali Arslan, and Thomas Serre. The language of actions: Recovering the syntax and semantics of goal directed human activities. In IEEE Conference on Computer Vision and Pattern Recognition (CVPR), pages 780-787, 2014.), and regardless of how the locations of the annotated timestamps are provided.

While the present approach is defined to handle missing annotations, it also works well when no annotation is missing.

While the present approach has been described in detail in the context of action segmentation, it can also be applied to the action localization task. Following Li, the above-described label (pseudo-ground-truth data) generation approach is used to train an action localization model using the human-annotated timestamps on the GTEA and BEOID datasets provided by Fan Ma, Linchao Zhu, Yi Yang, Shengxin Zha, Gourab Kundu, Matt Feiszli, and Zheng Shou. SF-Net: Single-frame supervision for temporal action localization. In European Conference on Computer Vision (ECCV), 2020. Results on both datasets show that the present approach outperforms Li by a large margin of 7% average mAP (mean Average Precision) on the GTEA and 18.5% mAP on the BEOID dataset. Furthermore, the present approach achieves competitive results to Pilhyeon Lee and Hyeran Byun. Learning action completeness from points for weakly-supervised temporal action localization. In IEEE International Conference on Computer Vision (ICCV), pages 13648-13657, 2021, which is specific for action localization.

Although the present disclosure refers to specific exemplary embodiments, modifications may be provided to these examples without departing from the general scope of the invention as defined by the claims. For instance, although the generating method has been described as applied to all the subsets within the video, the principles detailed therein may be applied to only part of the subsets, or to at least one subset. More generally, individual characteristics of the different illustrated/mentioned embodiments may be combined in additional embodiments. Therefore, the description and the drawings should be considered in an illustrative rather than in a restrictive sense.

**Claims**

1. A computer-implemented method (10) for generating pseudo-ground-truth data for training a machine learning model to segment or localize patterns in a sequence of frames over a succession dimension, the method comprising:

   - providing (12) a sequence of frames and a plurality of timestamps (52), each timestamp including identification of a respective one of the frames and a pattern annotation of said frame;
   - defining (14) at least one subset (54) comprising the frames located between a first timestamp ($p_i$) and a consecutive second timestamp ($p_{i+1}$) of the plurality of timestamps, in the succession dimension;
   - initially assigning (16) the frames of the at least one subset (54) to one of three non-empty regions, the three regions comprising a first region (55), a second region (59) and a neutral region (57) joining the first region (55) to the second region (59), wherein the first region (55) starts from the first timestamp ($p_i$) and extends towards the second timestamp ($p_{i+1}$), and comprises the frames to be associated with the pattern of the first timestamp ($p_i$), the second region (59) starts from the second timestamp ($p_{i+1}$) and extends towards the first timestamp ($p_i$), and comprises the frames to be associated with the pattern of the second timestamp ($p_{i+1}$);
   - obtaining (18) pattern estimations for each frame of the at least one subset;
   - optimizing (20) respective boundaries between the first region (55), the second region (59) and the neutral region (57) based on a compromise between the size of the neutral region (57) and a match between the pattern estimations of the frames and the regions to which the frames are assigned;
   - outputting (22) pseudo-ground-truth data (60) comprising, for each frame of the first region and/or the second region after the optimizing, identification of said frame and, as a corresponding pattern annotation, the pattern annotation of the first timestamp ($p_i$) and/or the second timestamp ($p_{i+1}$), respectively;
   wherein the optimizing comprises solving the constrained minimization problem

$$\{r_i^*, g_i^*, l_i^*\} = \underset{r_i, g_i, l_i}{\operatorname{argmin}} \quad \sum_{i=1}^{N} \left( \sum_{t=p_i-l_i}^{p_i+r_i} -log\tilde{y}_t[y_{p_i}] \right) + \beta \sum_{i=0}^{N} g_i$$

$$\text{s.t.} \quad p_{i+1} - p_i = r_i + g_i + l_{i+1}$$
$$r_i \geq 0$$
$$g_i \geq 0$$
$$l_i \geq 0.$$

   where $r_i$ is the number of frames of the first region, $g_i$ is the number of frames of the neutral region, $l_{i+1}$ is the number of frames of the second region, $N$ is the number of timestamps, $p_i$ is the position of the $i$-th timestamp in the sequence, $y_{p_i}$ is the pattern annotation of the $i$-th timestamp, $\tilde{y}_t$ is the pattern estimation for frame $t$, and $\beta$ is a hyperparameter.

2. The method of claim 1, wherein the pattern estimations are obtained by the machine learning model.

3. The method of claim 1 or 2, wherein the neutral region (57) comprises the frames to be associated with an unknown pattern, and optionally wherein the pseudo-ground-truth data (60) comprise, for each frame of the neutral region (57) after the optimizing, identification of said frame and, as a corresponding pattern annotation, the unknown pattern.

4. The method of any one of claims 1 to 3, wherein the sequence of frames (50) is selected from a group comprising a plurality of images, a video, an audio track, an electrical input.

5. The method of any one of claims 1 to 4, wherein the pattern is an action.

6. The method of any one of claims 1 to 5, further comprising

   - defining at least one end subset comprising the frames located between an end of the sequence and a third timestamp ($p_1$) consecutive to said end, in the succession dimension;
   - initially assigning the frames of the at least one end subset to one of two non-empty regions, the two regions comprising a third region (53) and an end region (51), wherein the third region (53) starts from the third timestamp ($p_1$) and extends towards the end of the sequence, and comprises the frames to be associated with the pattern of the third timestamp ($p_1$), and the end regions (51) joins the third region (53) to the end of the sequence;
- obtaining pattern estimations for each frame of the at least one end subset;
- optimizing a boundary between the third region (53) and the end region (51) based on a compromise between the size of the end region and a match between the pattern estimations of the frames and the regions to which the frames are assigned;

wherein the pseudo-ground-truth data (60) comprises, for each frame of the third region (53) after the optimizing, identification of said frame and, as a corresponding pattern annotation, the pattern annotation of the third timestamp ($p_1$).

7. The method of any one of claims 1 to 6, wherein a match between the pattern estimations of the frames and the regions to which the frames are assigned is quantified using a sum of log probabilities of pattern estimations of the frames assigned to the respective regions.

8. The method of any one of claims 1 to 7, wherein the compromise is represented by a non-differentiable model and the optimizing comprises solving a differentiable approximation of the non-differentiable model.

9. A training method for a machine learning model configured to segment or localize patterns in a sequence of frames over a succession dimension, the training method comprising:

   - generating pseudo-ground-truth data by the method (10) of any one of claims 1 to 8;
   - training (24) the machine learning model based on the pseudo-ground-truth data.

10. A system (30) configured to generate pseudo-ground-truth data for training a machine learning model to segment or localize patterns in a sequence of frames over a succession dimension, the system being configured to:

   - provide a sequence of frames and a plurality of timestamps, each timestamp including identification of a respective one of the frames and a pattern annotation of said frame;
   - define at least one subset comprising the frames located between a first timestamp and a consecutive second timestamp of the plurality of timestamps, in the succession dimension;
   - initially assign the frames of the at least one subset to one of three non-empty regions, the three regions comprising a first region, a second region and a neutral region joining the first region to the second region, wherein the first region starts from the first timestamp and extends towards the second timestamp, and comprises the frames to be associated with the pattern of the first timestamp, the second region starts from the second timestamp and extends towards the first timestamp, and comprises the frames to be associated with the pattern of the second timestamp;
   - obtain pattern estimations for each frame of the at least one subset;
   - optimize respective boundaries between the first region, the second region and the neutral region based on a compromise between the size of the neutral region and a match between the pattern estimations of the frames and the regions to which the frames are assigned;
   - output pseudo-ground-truth data comprising, for each frame of the first region and/or the second region after the optimizing, identification of said frame and, as a corresponding pattern annotation, the pattern annotation of the first timestamp and/or the second timestamp, respectively;
   wherein the optimizing comprises solving the constrained minimization problem

$$\{r_i^*, g_i^*, l_i^*\} = \underset{r_i, g_i, l_i}{\operatorname{argmin}} \quad \sum_{i=1}^{N} \left( \sum_{t=p_i-l_i}^{p_i+r_i} -log\tilde{y}_t[y_{p_i}] \right) + \beta \sum_{i=0}^{N} g_i$$

$$\text{s.t.} \quad p_{i+1} - p_i = r_i + g_i + l_{i+1}$$
$$r_i \geq 0$$
$$g_i \geq 0$$
$$l_i \geq 0.$$

where $r_i$ is the number of frames of the first region, $g_i$ is the number of frames of the neutral region, $l_{i+1}$ is the number of frames of the second region, $N$ is the number of timestamps, $p_i$ is the position of the $i$-th timestamp in the sequence, $y_{p_i}$ is the pattern annotation of the *i*-th timestamp, $\tilde{y}_t$ is the pattern estimation for frame *t,* and $\beta$ is a hyperparameter.

11. A computer program comprising instructions which, when the program is executed by a computer, cause the computer to carry out the steps of the method of any one of claims 1 to 9.

12. A computer-readable storage medium comprising instructions which, when the program is executed by a computer, cause the computer to carry out the steps of the method of any one of claims 1 to 9.

**Patentansprüche**

1. Computerimplementiertes Verfahren (10) zum Erzeugen von Pseudo-Ground-Truth-Daten zum Trainieren eines Modells maschinellen Lernens, um Muster in einer Abfolge von Frames über eine Sukzessionsdimension zu segmentieren oder zu lokalisieren, das Verfahren umfassend:

   - Bereitstellen (12) einer Abfolge von Frames und einer Vielzahl von Zeitstempeln (52), wobei jeder Zeitstempel eine Identifizierung eines entsprechenden Frames und eine Musterbezeichnung des Frames beinhaltet;
   - Definieren (14) mindestens eines Teilsatzes (54), der die Frames umfasst, die sich zwischen einem ersten Zeitstempel ($p_i$) und einem darauf folgenden zweiten Zeitstempel ($p_{i+1}$) der Vielzahl von Zeitstempeln in der Sukzessionsdimension befinden;
   - anfängliches Zuordnen (16) der Frames des mindestens einen Teilsatzes (54) zu einer von drei nicht leeren Regionen, die drei Regionen umfassend eine erste Region (55), eine zweite Region (59) und eine neutrale Region (57), die die erste Region (55) mit der zweiten Region (59) verbindet, wobei die erste Region (55) an dem ersten Zeitstempel ($p_i$) beginnt und sich zu dem zweiten Zeitstempel ($p_{i+1}$) erstreckt, und die Frames umfasst, die mit dem Muster des ersten Zeitstempels ($p_i$) assoziiert werden sollen, wobei die zweite Region (59) an dem zweiten Zeitstempel ($p_{i+1}$) beginnt und sich zu dem ersten Zeitstempel ($p_i$) erstreckt und die Frames umfasst, die mit dem Muster des zweiten Zeitstempels ($p_{i+1}$) assoziiert werden sollen;
   - Erlangen (18) von Musterschätzungen für jedes Frame des mindestens einen Teilsatzes;
   - Optimieren (20) jeweiliger Grenzen zwischen der ersten Region (55), der zweiten Region (59) und der neutralen Region (57) basierend auf einem Kompromiss zwischen der Größe der neutralen Region (57) und einer Übereinstimmung zwischen den Musterschätzungen der Frames und den Regionen, denen die Frames zugeordnet sind;
   - Ausgeben (22) von Pseudo-Ground-Truth-Daten (60), umfassend, für jedes Frame der ersten Region und/oder der zweiten Region nach der Optimierung, eine Identifizierung des Frames und, als entsprechende Musterbezeichnung, die Musterbezeichnung des ersten Zeitstempels ($p_i$) bzw. des zweiten Zeitstempels ($p_{i+1}$) umfassen; wobei das Optimieren ein Lösen des eingeschränkten Minimierungsproblems umfasst

$$\{r_i^*, g_i^*, l_i^*\} = \underset{r_i, g_i, l_i}{\operatorname{argmin}} \quad \sum_{i=1}^{N} \left( \sum_{t=p_i-l_i}^{p_i+r_i} -log\tilde{y}_t[y_{p_i}] \right) + \beta \sum_{i=0}^{N} g_i$$

$$\text{s.t.} \quad p_{i+1} - p_i = r_i + g_i + l_{i+1}$$
$$r_i \geq 0$$
$$g_i \geq 0$$
$$l_i \geq 0.$$

   wobei $r_i$ die Anzahl an Frames der ersten Region, $g_i$ die Anzahl an Frames der neutralen Region, $l_{i+1}$ die Anzahl an Frames der zweiten Region, *N* die Anzahl der Zeitstempel, $p_i$ die Position des *i*-ten Zeitstempels in der Abfolge, $y_{p_i}$ die Musteranmerkung des *i*-ten Zeitstempels, $\tilde{y}_t$ die Musterschätzung für Frame *t* und $\beta$ ein Hyperparameter ist.

2. Verfahren nach Anspruch 1, wobei die Musterschätzungen durch das Modell maschinellen Lernens erlangt werden.

3. Verfahren nach Anspruch 1 oder 2, wobei die neutrale Region (57) die Frames umfasst, die mit einem unbekannten Muster assoziiert werden sollen, und optional wobei die Pseudo-Ground-Truth-Daten (60), für jedes Frame der neutralen Region (57) nach der Optimierung, eine Identifizierung des Frames und, als entsprechende Musterbezeichnung, das unbekannte Muster umfassen.

4. Verfahren nach einem der Ansprüche 1 bis 3, wobei die Abfolge von Frames (50) ausgewählt ist aus einer Gruppe, umfassend eine Vielzahl von Bildern, ein Video, eine Tonspur, einen elektrischen Eingang.

5. Verfahren nach einem der Ansprüche 1 bis 4, wobei das Muster eine Aktion ist.

6. Verfahren nach einem der Ansprüche 1 bis 5, ferner umfassend:

- Definieren mindestens eines Endteilsatzes, umfassend die Frames, die sich zwischen einem Ende der Abfolge und einem dritten Zeitstempel ($p_i$), der auf dieses Ende folgt, in der Sukzessionsdimension befinden;
- anfängliches Zuordnen der Frames des mindestens einen Endteilsatzes zu einem von zwei nicht leeren Regionen, wobei die zwei Regionen eine dritte Region (53) und eine Endregion (51) umfassen, wobei die dritte Region (53) an dem dritten Zeitstempel ($p_i$) beginnt und sich zu dem Ende der Abfolge erstreckt und die Frames umfasst, die mit dem Muster des dritten Zeitstempels ($p_i$) assoziiert werden sollen, und die Endregion (51) die dritte Region (53) mit dem Ende der Abfolge verbindet;
- Erlangen von Musterschätzungen für jedes Frame des mindestens einen Endteil satzes;
- Optimieren einer Grenze zwischen der dritten Region (53) und der Endregion (51) basierend auf einem Kompromiss zwischen der Größe der Endregion und einer Übereinstimmung zwischen den Musterschätzungen der Frames und den Regionen, denen die Frames zugeordnet sind;

wobei die Pseudo-Ground-Truth-Daten (60) für jedes Frame der dritten Region (53) nach der Optimierung eine Identifizierung des Frames und, als entsprechende Musterbezeichnung, die Musterbezeichnung des dritten Zeitstempels ($p_i$) umfassen.

7. Verfahren nach einem der Ansprüche 1 bis 6, wobei eine Übereinstimmung zwischen den Musterschätzungen der Frames und den Regionen, denen die Frames zugeordnet sind, unter Verwendung einer Summe von logarithmischen Wahrscheinlichkeiten der Musterschätzungen der den jeweiligen Regionen zugeordneten Frames quantifiziert wird.

8. Verfahren nach einem der Ansprüche 1 bis 7, wobei der Kompromiss durch ein nicht differenzierbares Modell dargestellt ist und das Optimieren ein Lösen einer differenzierbaren Annäherung des nicht differenzierbaren Modells umfasst.

9. Trainingsverfahren für ein Modell maschinellen Lernens, das konfiguriert ist, um Muster in einer Abfolge von Frames über eine Sukzessionsdimension zu segmentieren oder zu lokalisieren, das Trainingsverfahren umfassend:

- Erzeugen von Pseudo-Ground-Truth-Daten gemäß dem Verfahren (10) nach einem der Ansprüche 1 bis 8;
- Trainieren (24) des Modells maschinellen Lernens basierend auf den Pseudo-Ground-Truth-Daten.

10. System (30), das konfiguriert ist, um Pseudo-Ground-Truth-Daten zum Trainieren eines Modells maschinellen Lernens zu erzeugen, um Muster in einer Abfolge von Frames über eine Sukzessionsdimension zu segmentieren oder zu lokalisieren, wobei das System zu Folgendem konfiguriert ist:

- Bereitstellen einer Abfolge von Frames und einer Vielzahl von Zeitstempeln, wobei jeder Zeitstempel eine Identifizierung eines entsprechenden Frames und eine Musterbezeichnung des Frames beinhaltet;
- Definieren mindestens eines Teilsatzes, der die Frames umfasst, die sich zwischen einem ersten Zeitstempel und einem darauf folgenden zweiten Zeitstempel der Vielzahl von Zeitstempeln in der Sukzessionsdimension befinden;
- anfängliches Zuordnen der Frames des mindestens einen Teilsatzes zu einer von drei nicht leeren Regionen, die drei Regionen umfassend eine erste Region, eine zweite Region und eine neutrale Region, die die erste Region mit der zweiten Region verbindet, wobei die erste Region an dem ersten Zeitstempel beginnt und sich zu dem zweiten Zeitstempel erstreckt, und die Frames umfasst, die mit dem Muster des ersten Zeitstempels assoziiert werden sollen, wobei die zweite Region an dem zweiten Zeitstempel beginnt und sich zu dem ersten Zeitstempel erstreckt und die Frames umfasst, die mit dem Muster des zweiten Zeitstempels assoziiert werden sollen;
- Erlangen von Musterschätzungen für jedes Frame des mindestens einen Teilsatzes;
- Optimieren jeweiliger Grenzen zwischen der ersten Region, der zweiten Region und der neutralen Region basierend auf einem Kompromiss zwischen der Größe der neutralen Region und einer Übereinstimmung zwischen den Musterschätzungen der Frames und den Regionen, denen die Frames zugeordnet sind;
- Ausgeben von Pseudo-Ground-Truth-Daten, umfassend, für jedes Frame der ersten Region und/oder der zweiten Region nach der Optimierung, eine Identifizierung des Frames und, als entsprechende Musterbezeichnung, die Musterbezeichnung des ersten Zeitstempels bzw. des zweiten Zeitstempels umfassen;
wobei das Optimieren ein Lösen des eingeschränkten Minimierungsproblems umfasst

$$\{r_i^*, g_i^*, l_i^*\} = \underset{r_i, g_i, l_i}{\operatorname{argmin}} \quad \sum_{i=1}^{N} \left( \sum_{t=p_i-l_i}^{p_i+r_i} -log\tilde{y}_t[y_{p_i}] \right) + \beta \sum_{i=0}^{N} g_i$$

$$\text{s. t.} \quad p_{i+1} - p_i = r_i + g_i + l_{i+1}$$
$$r_i \geq 0$$
$$g_i \geq 0$$
$$l_i \geq 0.$$

wobei $r_i$ die Anzahl an Frames der ersten Region, $g_i$ die Anzahl an Frames der neutralen Region, $l_{i+1}$ die Anzahl an Frames der zweiten Region, $N$ die Anzahl der Zeitstempel, $p_i$ die Position des $i$-ten Zeitstempels in der Abfolge, $y_{p_i}$ die Musteranmerkung des $i$-ten Zeitstempels, $\tilde{y}_t$ die Musterschätzung für Frame $t$ und $\beta$ ein Hyperparameter ist.

11. Computerprogramm, umfassend Anweisungen, die, wenn das Programm von einem Computer ausgeführt wird, den Computer veranlassen, die Schritte des Verfahrens nach einem der Ansprüche 1 bis 9 durchzuführen.

12. Computerlesbares Speichermedium, umfassend Anweisungen, die, wenn das Programm von einem Computer ausgeführt wird, den Computer veranlassen, die Schritte des Verfahrens nach einem der Ansprüche 1 bis 9 durchzuführen.

**Revendications**

1. Procédé mis en oeuvre par ordinateur (10) destiné à générer des données de pseudo-réalité de terrain pour entraîner un modèle d'apprentissage automatique à segmenter ou localiser des motifs dans une séquence de vues le long d'une dimension de succession, le procédé comprenant le fait de :

- fournir (12) une séquence de vues et une pluralité d'horodatages (52), chaque horodatage comprenant une identification de l'une respective des vues et une annotation de motif de ladite vue ;
- définir (14) au moins un sous-ensemble (54) comprenant les vues situées entre un premier horodatage ($p_i$) et un deuxième horodatage consécutif ($p_{i+1}$) de la pluralité d'horodatages, dans la dimension de succession ;
- assigner initialement (16) les vues du au moins un sous-ensemble (54) à une de trois zones non vides, les trois zones comprenant une première zone (55), une deuxième zone (59) et une zone neutre (57) qui relie la première zone (55) à la deuxième zone (59), la première zone (55) commençant à partir du premier horodatage ($p_i$) et s'étendant vers le deuxième horodatage ($p_{i+1}$), et comprenant les vues devant être associées au motif du premier horodatage ($p_i$), la deuxième zone (59) commençant à partir du deuxième horodatage ($p_{i+1}$) et s'étendant vers le premier horodatage ($p_i$), et comprenant les vues devant être associées au motif du deuxième horodatage ($p_{i+1}$) ;
- obtenir (18) des estimations de motif pour chaque vue du au moins un sous-ensemble ;
- optimiser (20) des limites respectives entre la première zone (55), la deuxième zone (59) et la zone neutre (57) sur la base d'un compromis entre la taille de la zone neutre (57) et une correspondance entre les estimations de motif des vues et les zones auxquelles les vues sont assignées ;
- délivrer (22) des données de pseudo-réalité de terrain (60) comprenant, pour chaque vue de la première zone et/ou de la deuxième zone après l'optimisation, une identification de ladite vue et, comme annotation de motif correspondante, l'annotation de motif du premier horodatage ($p_i$) et/ou du deuxième horodatage ($p_{i+1}$), respectivement ;
l'optimisation comprenant la résolution du problème de minimisation contraint

$$\{r_i^*, g_i^*, l_i^*\} = \operatorname*{argmin}_{r_i, g_i, l_i} \sum_{i=1}^{N} \left( \sum_{t=p_i-l_i}^{p_i+r_i} -log\tilde{y}_t[y_{p_i}] \right) + \beta \sum_{i=0}^{N} g_i$$

$$\text{s.t.} \quad p_{i+1} - p_i = r_i + g_i + l_{i+1}$$
$$r_i \geq 0$$
$$g_i \geq 0$$
$$l_i \geq 0.$$

où $r_i$ est le nombre de vues de la première zone, $g_i$ est le nombre de vues de la zone neutre, $l_{i+1}$ est le nombre de vues de la deuxième zone, $N$ est le nombre d'horodatages, $p_i$ est la position du ième horodatage dans la séquence, $y_{p_i}$ est l'annotation de motif du ième horodatage, $\tilde{y}_t$ est l'estimation de motif pour la vue $t$, $\beta$ est un hyperparamètre.

2. Procédé selon la revendication 1, selon lequel les estimations de motif sont obtenues par le modèle d'apprentissage automatique.

3. Procédé selon la revendication 1 ou 2, selon lequel la zone neutre (57) comprend les vues devant être associées à un motif inconnu, et optionnellement selon lequel les données de pseudo-réalité de terrain (60) comprennent, pour chaque vue de la zone neutre (57) après l'optimisation, une identification de ladite vue et, comme annotation de motif correspondante, le motif inconnu.

4. Procédé selon l'une quelconque des revendications 1 à 3, selon lequel la séquence de vues (50) est sélectionnée dans un groupe comprenant une pluralité d'images, une vidéo, une piste audio, une entrée électrique.

5. Procédé selon l'une quelconque des revendications 1 à 4, selon lequel le motif est une action.

6. Procédé selon l'une quelconque des revendications 1 à 5, comprenant en outre le fait de

- définir au moins un sous-ensemble d'extrémité comprenant les vues situées entre une extrémité de la séquence et un troisième horodatage ($p_1$) consécutif à ladite extrémité, dans la dimension de succession ;
- assigner initialement les vues du au moins un sous-ensemble d'extrémité à une de deux zones non vides, les deux zones comprenant une troisième zone (53) et une zone d'extrémité (51), la troisième zone (53) commençant à partir du troisième horodatage ($p_1$) et s'étendant vers l'extrémité de la séquence, et comprenant les vues devant être associées au motif du troisième horodatage ($p_1$), et les zones d'extrémité (51) reliant la troisième zone (53) à l'extrémité de la séquence ;
- obtenir des estimations de motif pour chaque vue du au moins un sous-ensemble d'extrémité ;
- optimiser une limite entre la troisième zone (53) et la zone d'extrémité (51) sur la base d'un compromis entre la taille de la zone d'extrémité et une correspondance entre les estimations de motif des vues et les zones auxquelles les vues sont assignées ;

les données de pseudo-réalité de terrain (60) comprenant, pour chaque vue de la troisième zone (53) après l'optimisation, une identification de ladite vue et, comme annotation de motif correspondante, l'annotation de motif du troisième horodatage ($p_1$).

7. Procédé selon l'une quelconque des revendications 1 à 6, selon lequel une correspondance entre les estimations de motif des vues et les zones auxquelles les vues sont assignées est quantifiée en utilisant une somme de probabilités logarithmiques d'estimations de motif des vues assignées aux zones respectives.

8. Procédé selon l'une quelconque des revendications 1 à 7, selon lequel le compromis est représenté par un modèle non différentiable et l'optimisation comprend la résolution d'une approximation différentiable du modèle non différentiable.

9. Procédé d'entraînement pour un modèle d'apprentissage automatique configuré pour segmenter ou localiser des motifs dans une séquence de vues le long d'une dimension de succession, le procédé d'entraînement comprenant le fait de :

- générer des données de pseudo-réalité de terrain grâce au procédé (10) selon l'une quelconque des revendications 1 à 8 ;
- entraîner (24) le modèle d'apprentissage automatique sur la base des données de pseudo-réalité de terrain.

**10.** Système (30) configuré pour générer des données de pseudo-réalité de terrain afin d'entraîner un modèle d'apprentissage automatique à segmenter ou localiser des motifs dans une séquence de vues le long d'une dimension de succession, le système étant configuré pour :

- fournir une séquence de vues et une pluralité d'horodatages, chaque horodatage comprenant une identification de l'une respective des vues et une annotation de motif de ladite vue ;
- définir au moins un sous-ensemble comprenant les vues situées entre un premier horodatage et un deuxième horodatage consécutif de la pluralité d'horodatages, dans la dimension de succession ;
- assigner initialement les vues du au moins un sous-ensemble à une de trois zones non vides, les trois zones comprenant une première zone, une deuxième zone et une zone neutre qui relie la première zone à la deuxième zone, la première zone commençant à partir du premier horodatage et s'étendant vers le deuxième horodatage, et comprenant les vues devant être associées au motif du premier horodatage, la deuxième zone commençant à partir du deuxième horodatage et s'étendant vers le premier horodatage, et comprenant les vues devant être associées au motif du deuxième horodatage ;
- obtenir des estimations de motif pour chaque vue du au moins un sous-ensemble ;
- optimiser des limites respectives entre la première zone, la deuxième zone et la zone neutre sur la base d'un compromis entre la taille de la zone neutre et une correspondance entre les estimations de motif des vues et les zones auxquelles les vues sont assignées ;
- délivrer des données de pseudo-réalité de terrain comprenant, pour chaque vue de la première zone et/ou de la deuxième zone après l'optimisation, une identification de ladite vue et, comme annotation de motif correspondante, l'annotation de motif du premier horodatage et/ou du deuxième horodatage, respectivement ; l'optimisation comprenant la résolution du problème de minimisation contraint

$$\{r_i^*, g_i^*, l_i^*\} = \underset{r_i, g_i, l_i}{\operatorname{argmin}} \quad \sum_{i=1}^{N} \left( \sum_{t=p_i-l_i}^{p_i+r_i} -log\tilde{y}_t[y_{p_i}] \right) + \beta \sum_{i=0}^{N} g_i$$

$$\text{s.t.} \quad p_{i+1} - p_i = r_i + g_i + l_{i+1}$$
$$r_i \geq 0$$
$$g_i \geq 0$$
$$l_i \geq 0.$$

où $r_i$ est le nombre de vues de la première zone, $g_i$ est le nombre de vues de la zone neutre, $l_{i+1}$ est le nombre de vues de la deuxième zone, N est le nombre d'horodatages, $p_i$ est la position du ième horodatage dans la séquence, $y_{p_i}$ est l'annotation de motif du ième horodatage, $\tilde{y}_t$ est l'estimation de motif pour la vue $t$, $\beta$ est un hyperparamètre.

**11.** Programme informatique comprenant des instructions qui, quand le programme est exécuté par un ordinateur, amènent l'ordinateur à mettre en oeuvre les étapes du procédé selon l'une quelconque des revendications 1 à 9.

**12.** Support de stockage lisible par un ordinateur comprenant des instructions qui, quand le programme est exécuté par un ordinateur, amènent l'ordinateur à mettre en oeuvre les étapes du procédé selon l'une quelconque des revendications 1 à 9.

**FIG. 1**

**FIG. 2**

A          B          C

40

42

44

# FIG. 3

51    53    55    57    59
            $p_1$                $p_2$

$g_0$    $l_1$    $r_1$    $g_1$    $l_2$    $r_2$    $g_2$

# FIG. 4

## REFERENCES CITED IN THE DESCRIPTION

**Patent documents cited in the description**

- EP 21184408 A

**Non-patent literature cited in the description**

- **ZHE LI ; YAZAN ABU FARHA ; JUERGEN GALL.** Temporal action segmentation from timestamp supervision. *In IEEE Conference on Computer Vision and Pattern Recognition (CVPR),* 2021, 8365-8374
- Less is More: Surgical Phase Recognition from Timestamp Supervision. **ZIXUN WANG et al.** arxiv.org. Cornell University Library, 16 February 2022
- **SEBASTIAN STEIN ; STEPHEN J MCKENNA.** Combining embedded accelerometers with computer vision for recognizing food preparation activities. *In ACM International Joint Conference on Pervasive and Ubiquitous Computing,* 2013, 729-738
- **HILDE KUEHNE ; ALI ARSLAN ; THOMAS SERRE.** The language of actions: Recovering the syntax and semantics of goal directed human activities. *In IEEE Conference on Computer Vision and Pattern Recognition (CVPR),* 2014, 780-787
- **FAN MA ; LINCHAO ZHU ; YI YANG ; SHENGXIN ZHA ; GOURAB KUNDU ; MATT FEISZLI ; ZHENG SHOU.** SF-Net: Single-frame supervision for temporal action localization. *In European Conference on Computer Vision (ECCV),* 2020
- **PILHYEON LEE ; HYERAN BYUN.** Learning action completeness from points for weakly-supervised temporal action localization. *In IEEE International Conference on Computer Vision (ICCV),* 2021, 13648-13657